# EUROPEAN PATENT SPECIFICATION

(11) **EP 3 035 321 B1**
(45) Date of publication and mention of the grant of the patent: **15.11.2017**
(21) Application number: 15200056.8
(22) Date of filing: 15.12.2015
(51) Int. Cl.: G09F 9/33, G09F 9/35, G09F 9/30

(54) **DISPLAY DEVICE**
ANZEIGEVORRICHTUNG
DISPOSITIF D'AFFICHAGE

(30) Priority: 17.12.2014 KR 20140182289
(43) Date of publication of application: 22.06.2016
(73) Proprietor: Samsung Display Co., Ltd., Gyeonggi-do (KR)
(72) Inventor: Kim, Sebong, 303-701 Asan-si, Chungcheongnam-do (KR)
(74) Representative: Dr. Weitzel & Partner

(56) References cited:
- US-A1- 2007 165 425
- US-A1- 2009 168 318
- US-A1- 2011 025 942
- US-A1- 2011 261 284
- US-A1- 2012 155 111
- US-A1- 2012 162 564

## Description

### BACKGROUND

### 1. Field

Embodiments relate to a display device as per the preamble of claim 1.

### 2. Description of the Related Art

Display devices may include liquid crystal display (LCD) devices, organic light emitting diode (OLED) display devices, plasma display panel (PDP) devices, and electrophoretic display devices, based on a driving scheme of a display panel. Document US2011/261284A is considered the closest prior art.

### SUMMARY

It is the objective of the invention to provide a display device as per the preamble of claim 1 such that the thickness thereof is reduced to the largest possible extent.

The set objective is achieved by the characterizing portion of claim 1.

Portions of the bottom part and the side part of the lower frame are cut out.

The flange is bent from the side part of the lower frame.

The flange may have a substantially same shape as a shape of the opening.

The may have has an indentation having a substantially same shape as a shape of the protrusion.

The protrusion may extend in a length direction of the opening.

The protrusion may extend in a width direction of the opening.

The lower frame may include first and second protrusions extending to oppose one another.

The lower frame may include first and second protrusions extending to alternate with one another.

The flange may have a width greater than a sum of lengths of the first and second protrusions.

The lower frame may include at least one pair of first and second protrusions.

The lower frame may have the opening in at least an edge portion of the bottom part.

The display device may further include a light source to provide light to the display panel; and a light source substrate to drive the light source. The light source and the light source substrate may be on the opening of the lower frame.

The light source may be on the protrusion to overlap the protrusion.

The flange may have a screw hole to couple the flange to the drive circuit board.

The lower frame may include one or more of aluminum (Al), an A1 alloy, magnesium (Mg), a Mg alloy, copper (Cu), a Cu alloy, or steel use stainless (SUS).

### BRIEF DESCRIPTION OF THE DRAWINGS

Features will become apparent to those of skill in the art by describing in detail exemplary embodiments with reference to the attached drawings in which:
FIG. 1 illustrates an exploded perspective view of a display device according to an exemplary embodiment;
FIG. 2 illustrates a plan view of a display device according to an exemplary embodiment;
FIG. 3 illustrates a bottom view of a display device according to an exemplary embodiment;
FIG. 4 illustrates an enlarged view of portion "A" of FIG. 3;
FIG. 5 illustrates a cross-sectional view taken along line I-II of FIG. 4;
FIG. 6 illustrates a perspective view of a lower frame according to an exemplary embodiment;
FIG. 7 illustrates an enlarged view of portion "B" of FIG. 6;
FIGS. 8 through 11 illustrate enlarged views of portions of lower frames according to other exemplary embodiments, respectively;
FIGS. 12A through 12C illustrate perspective views of a process of manufacturing a lower frame according to an exemplary embodiment; and
FIGS. 13A through 13C illustrate cross-sectional views of a process of manufacturing a lower frame according to an exemplary embodiment.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. Like reference numerals refer to like elements throughout.

Throughout the specification, when an element is referred to as being "connected" to another element, the element is "directly connected" to the other element, or "electrically connected" to the other element with one or more intervening elements interposed therebetween. It will be further understood that the terms "comprises, " "comprising," "includes," and/or "including," when used in this specification, specify the presence of stated features, integers, steps, operations, elements, and/or components, but do not preclude the presence or addition of one or more other features, integers, steps, operations, elements, components, and/or groups thereof.

It will be understood that, although the terms "first", "second", and the like, may be used herein to describe various elements, components, areas, layers and/or sections, these elements, components, areas, layers and/or sections should not be limited by these terms. These terms are only used to distinguish one element, component, area, layer or section from another element, component, area, layer or section. Thus, a first element, component, area, layer or section discussed below could be termed a second element, component, area, layer or section without departing from the teachings of example embodiments.

Unless otherwise defined, all terms used herein (including technical and scientific terms) have the same meaning as commonly understood by those skilled in the art. It will be further understood that terms, such as those defined in commonly used dictionaries, should be interpreted as having a meaning that is consistent with their meaning in the context of the relevant art and will not be interpreted in an ideal or excessively formal sense unless clearly defined in the present specification.

Hereinafter, a display device according to an exemplary embodiment will be described under the assumption that the display device is a liquid crystal display (LCD) device. However, according to exemplary embodiments, an organic light emitting diode (OLED) display device or a plasma display panel (PDP) device as well as an LCD device may also be used.

Throughout the specification, the display device will be described under the assumption that the display device is an LCD panel. In an embodiment, the display device may be an OLED display panel.

Throughout the specification, the display device will be described under the assumption that the display device includes an edge-type backlight unit. In an embodiment, the backlight unit included the display device may also include a direct-type backlight unit or a corner-type backlight unit.

The display device according to the exemplary embodiment may be a slim-type display device in which a drive circuit board is supported by at least one flange formed by a portion of a lower frame being cut out to be bent outwardly thereof.

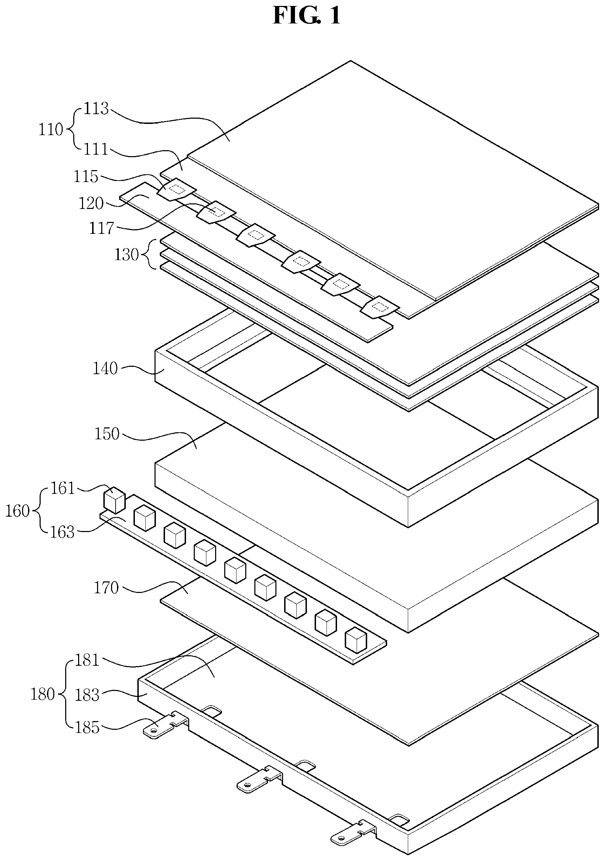

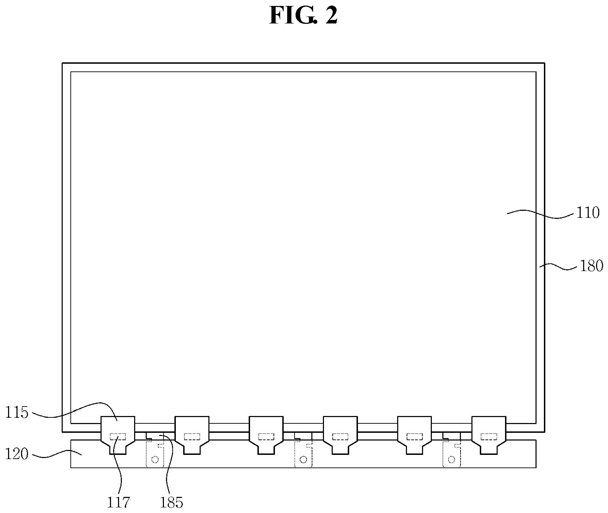

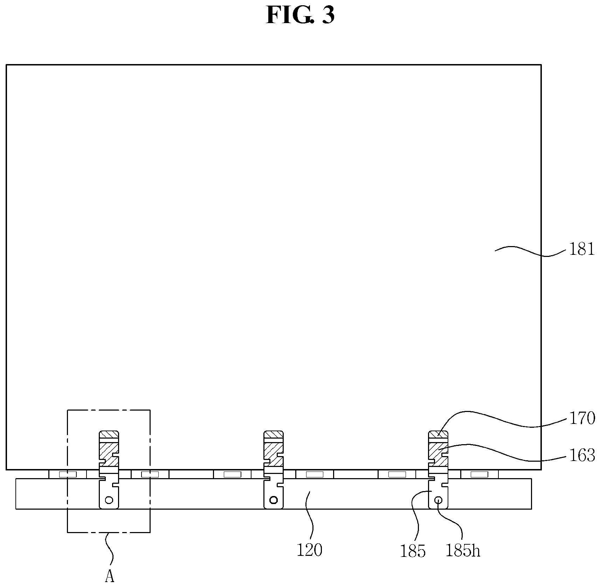

FIG. 1 illustrates an exploded perspective view of a display device according to an exemplary embodiment; FIG. 2 illustrates a plan view of a display device according to an exemplary embodiment; and FIG. 3 illustrates a rear view of a display device according to an exemplary embodiment.

Referring to FIGS. 1 through 3, a display device according to an exemplary embodiment may include a display panel 110, a drive circuit board 120, an optical sheet 130, an intermediate frame 140, a light guide plate 150, a light source unit 160, a reflective sheet 170, and a lower frame 180.

Hereinafter, for example, the optical sheet 130, the intermediate frame 140, the light guide plate 150, the light source unit 160, the reflective sheet 170, and the lower frame 180, will be collectively referred to as a backlight unit.

The display panel 110 may be provided as a quadrangular planar shape displaying an image by externally receiving an electrical signal applied thereto. The display panel 110 may include a first substrate 111, a second substrate 113 opposing the first substrate 111, and a liquid crystal layer formed between the first and second substrates 111 and 113.

The first substrate 111 may include a plurality of pixel electrodes disposed in a form of a matrix, a thin film transistor (TFT) applying a driving voltage to the pixel electrode, and various types of signal lines for driving the pixel electrode and the TFT.

The second substrate 113 may be disposed to oppose the first substrate 111, and may include a common electrode formed of a transparent conductive material and a color filter. The color filter may include red, green, and blue filters, by way of example.

The liquid crystal layer may be interposed between the first and second substrates 111 and 113, and may be rearranged by an electric field formed between the pixel electrode and the common electrode. The rearranged liquid crystal layer may adjust a level of transmissivity of light emitted from the backlight unit, the light having the adjusted level of transmissivity may pass through the color filter, and an image may be displayed outwardly.

A lower polarizing plate and an upper polarizing plate may further be disposed on a lower surface of the first substrate 111 and an upper surface of the second substrate 113, respectively. The upper polarizing plate and the lower polarizing plate may each have an area corresponding to an area of the display panel 110. The upper polarizing plate may pass through a predetermined component of polarized light from among externally supplied light, and may absorb or block the remainder of the externally supplied light. The lower polarizing plate may pass through a predetermined component of polarized light from among the light emitted from the backlight unit, and may absorb or block the remainder of the light emitted from the backlight unit.

The drive circuit board 120 may be disposed on at least one side portion of the display panel 110. The drive circuit board 120 may provide various types of control signals and power signals for driving the display panel 110.

The display panel 110 and the drive circuit board 120 may be electrically connected to one another by at least one flexible printed circuit board (FPCB) 115. The FPCB 115 may be a chip on film (COF) or a tape carrier package (TCP), and the number of FPCBs 115 may vary based on, for example, a size and a driving scheme, of the display panel 110.

A driving chip 117 may be mounted on the FPCB 115. The driving chip 117 may generate various driving signals for driving the display panel 110. The driving chip 117 may be a single chip in which a timing controller and a data drive circuit are integrated, and may also be referred to as, for example, a driver integrated circuit (IC) or a source integrated circuit (IC).

The intermediate frame 140 may support edges of the lower surface of the display panel 110 and may accommodate, for example, the optical sheet 130, the light guide plate 150, the light source unit 160, and the reflective sheet 170, therein. The intermediate frame 140 may have a polygonal frame shape having an opening formed therein. For example, the intermediate frame 140 may have a quadrangular frame shape having an opening formed therein. The intermediate frame 140 may be formed as a single frame. In an embodiment, the intermediate frame 140 may be formed to include a plurality of portions thereof to be subsequently assembled therefrom. The intermediate frame 140 may be formed of a flexible material such as plastic, and may be formed, for example, through an injection molding process.

The optical sheet 130 may be disposed on the light guide plate 150, and may serve to diffuse or collect light transmitted from the light guide plate 150. The optical sheet 130 may include a diffusion sheet, a prism sheet, and a protective sheet. The diffusion sheet, the prism sheet, and the protective sheet may be sequentially stacked on the light guide plate 150.

The prism sheet may collect light guided by the light guide plate 150, the diffusion sheet may disperse light collected by the prism sheet, and the protective sheet may protect the prism sheet. Light having passed through the protective sheet may be supplied to the display panel 110.

The light guide plate 150 may uniformly supply light supplied from the light source unit 160 to the display panel 110. The light guide plate 150 may have a quadrangular planar shape. In an embodiment, a light source such as a light emitting diode (LED) chip may be used, and the light guide plate 150 may have various shapes including, for example, a predetermined groove or a protrusion, based on a position of the light source.

The light guide plate 150 is described as having a planar shape, that is, a plate, for ease of description. In an embodiment, the light guide plate 150, may be provided in a sheet or film shape to achieve slimness of the display device. The light guide plate 150 is to be understood as having a concept that includes not only a plate but also a film for guiding light.

The light guide plate 150 may be formed of a light-transmissive material, for example, an acrylic resin such as polymethylmethacrylate (PMMA), or polycarbonate (PC) to help guide light efficiently.

The light source unit 160 may include a light source 161 and a light source substrate 163 on which the light source 161 is disposed.

The light source 161 may be disposed in an edge portion or on a light-incident side surface of the light guide plate 150. The light source 161 may emit light toward the edge portion or the light-incident side surface of the light guide plate 150. The light source 161 may include at least one LED chip and a package for accommodating the LED chip therein. For example, the LED chip may be a gallium nitride (GaN)-based LED chip emitting blue light.

The number of light sources 161 may vary based on, for example, a size and luminance uniformity, of the display panel 110. The light source substrate 163 may be a printed circuit board (PCB) or a metal printed circuit board (MPCB).

The light source unit 160 may be formed on one, two, or four side surfaces of the light guide plate 150 based on, for example, the size and luminance uniformity, of the display panel 110. In some exemplary embodiments, the light source unit 160 may be formed in at least one of the edge portions of the light guide plate 150.

In the display device according to the exemplary embodiment, the drive circuit board 120 and the light source unit 160 may be disposed on the same side portion of the display panel 110. The light source unit 160 may receive, for example, power signals and driving signals, applied thereto from the drive circuit board 120. Due to, for example, the drive circuit board 120 and the light source unit 160 being disposed on the same side portion of the display panel 110, a length of a wiring connecting the drive circuit board 120 and the light source unit 160 may be reduced.

A wavelength converting unit may be disposed between the light guide plate 150 and the light source unit 160. The wavelength converting unit may include a material converting a wavelength of light. For example, the wavelength converting unit may convert a wavelength of blue light emitted from a blue LED light source to obtain white light therefrom.

A heat dissipation member may be disposed between the light source unit 160 and the lower frame 180. The heat dissipation member may externally emit light generated in the light source unit 160. In a case in which the light source unit 160 is disposed on a side surface of the lower frame 180 in a form of a bar or a line, the heat dissipation member may also be disposed as a metal frame having a bar or line form. Accordingly, the heat dissipation may have various shapes based on the form of the light source unit 160.

The reflective sheet 170 may be formed of, for example, polyethylene terephthalate (PET) to have reflectivity. One surface of the reflective sheet 170 may be coated with a diffusion layer containing, for example, titanium dioxide (TiO₂). The reflective sheet 170 may be formed of a material containing a metal, such as silver (Ag).

The lower frame 180 may serve to maintain a framework of the display device, and to protect a variety of components accommodated therein. The lower frame 180 may include a bottom part 181, a side part 183 extending from the bottom part 181, and at least one flange 185 formed by portions of the bottom part 181 and the side part 183 being cut out to be bent outwardly thereof, respectively.

The lower frame 180 is illustrated as having three flanges 185 formed on a side part of the lower frame 180. In an embodiment, the number of the flanges 185 and an interval between the flanges 185 may vary based on a size of the drive circuit board 120. A detailed description of a configuration of the lower frame 180 and the flange 185 will further be provided below.

The lower frame 180 may be formed of a material having relatively excellent heat dissipation characteristics. For example, the lower frame 180 may include one or more of aluminum (Al), an A1 alloy, magnesium (Mg), a Mg alloy, copper (Cu), a Cu alloy, or steel use stainless (SUS).

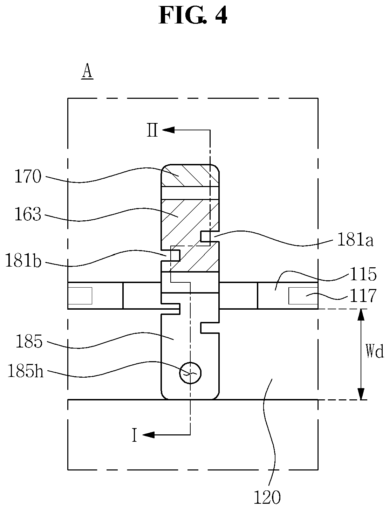

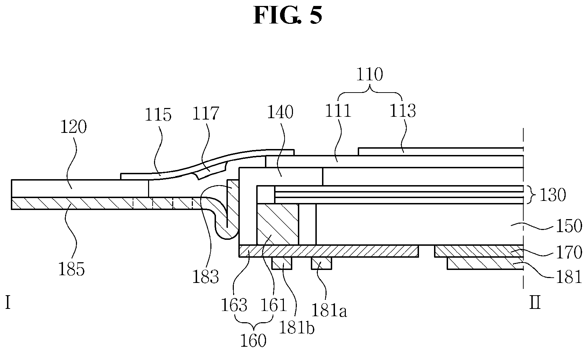

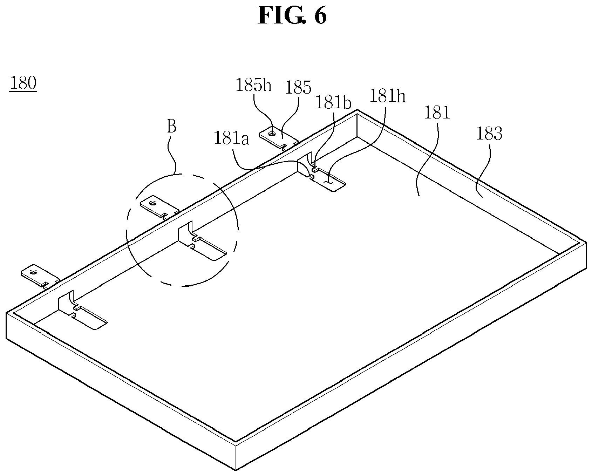

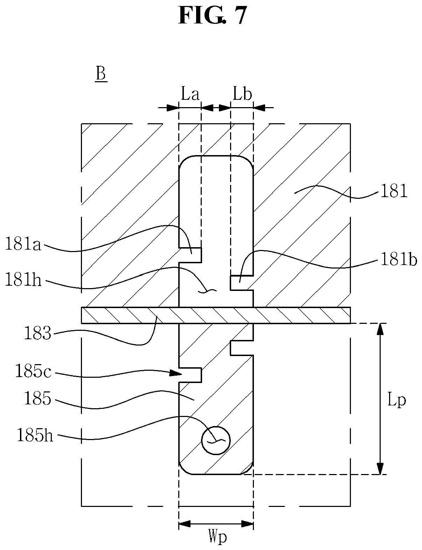

FIG. 4 illustrates an enlarged view of portion "A" of FIG. 3; FIG. 5 is a cross-sectional view taken along line I-II of FIG. 4; FIG. 6 illustrates a perspective view of a lower frame according to an exemplary embodiment; and FIG. 7 illustrates an enlarged view of portion "B" of FIG. 6.

Referring to FIGS. 4 through 7, the lower frame 180 according to the exemplary embodiment may include the bottom part 181, the side part 183 extending from the bottom part 181, and at least one flange 185 formed by the portions of the bottom part 181 and the side part 183 being cut out to be bent outwardly thereof, respectively.

The flange 185 may be formed by the portions of the bottom part 181 and the side part 183 being cut out to be bent from the side part 183 outwardly thereof by 180 degrees, respectively. The flange 185 may be formed on at least one side part of the lower frame 180, and may be formed to include at least one flange 185 in each side part 183 of the lower frame 180.

The drive circuit board 120 may be disposed on the flange 185. The drive circuit board 120 may be coupled to the flange 185 through hook coupling and/or screw coupling. The flange 185 may have a screw hole 185h used for screw coupling of the flange 185 to the drive circuit board 120. The screw hole 185h may be formed through, for example, a punching process, subsequently to the flange 185 being bent.

The flange 185 may be disposed above a predetermined height, based on a thickness direction of the backlight unit to help minimize a distance between the display panel 110 and the drive circuit board 120 disposed on the flange 185.

Referring to FIGS. 4 and 7, the flange 185 may have a predetermined width Wp and a predetermined length Lp. The width Wp and the length Lp of the flange 185 may be provided in various manners based on the size of the drive circuit board 120 disposed on the flange 185. For example, the length Lp of the flange 185 may be equal to or less than a width Wp of the drive circuit board 120.

The lower frame 180 may have the bottom part 181 and an opening 181h formed by portions of the bottom part 181 and the side part 183 being cut out, respectively, so as to form the flange 185. The bottom part 181 and the side part 183 may be cut out through, for example, a laser cutting process or a punching process. A cutting process of a metal may be employed to cut out portions of the bottom part 181 and the side part 183, respectively.

In the case of cutting the bottom part 181 and the side part 183 through the laser process, the opening 181h and the flange 185 may have substantially the same shape as one another. In the case of cutting the bottom part 181 and the side part 183 using the punching process, the flange 185 may be formed to be smaller than the opening 181h, for example, due to a thickness of the punch.

Referring to FIGS. 4 and 5, the lower frame 180 may include one or more protrusions 181a and 181b protruding inwardly of the opening 181h. Similarly thereto, the flange 185 may have an indentation 185c having a shape substantially the same as a shape of the protrusions 181a and 181b.

The light source 161 and the light source substrate 163 may be disposed on the opening 181h of the lower frame 180. The one or more protrusions 181a and 181b may be disposed on the light source 161 to overlap the light source 161. Due to, for example, the one or more protrusions 181a and 181b being disposed below the light source 161, sagging of the light source substrate 163 caused by weight of the light source 161 may be prevented. Accordingly, light from the light source 161 may be incident on the light guide plate 150 precisely, and light leakage may be prevented.

The lower frame 180 according to the exemplary embodiment may include first and second protrusions 181a and 181b extending to oppose one another in a direction of the width Wp of the flange 185 or the opening 181h, and the first and second protrusions 181a and 181b may be disposed in an alternating manner.

The flange 185 may have the width Wp greater than a sum of lengths La and Lb of the first and second protrusions 181a and 181b. The first and second protrusions 181a and 181b may be disposed to have a predetermined angle based on a virtual line in parallel with respect to the direction of the width Wp of the flange 185.

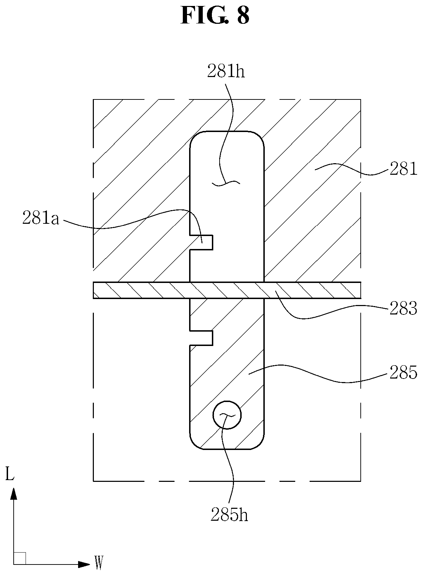

FIGS. 8 through 11 illustrate enlarged views of portions of lower frames according to other exemplary embodiments, respectively. A description pertaining to lower frames according to other exemplary embodiments including the same content as that of the lower frame according to the exemplary embodiment will be omitted for conciseness.

Referring to FIGS. 8 through 11, a lower frame according to another exemplary embodiment may include a bottom part, a side part extending from the bottom part, and at least one flange formed by portions of the bottom part and the side part being cut out to be bent outwardly thereof, respectively.

The lower frame may have an opening formed by a portion of the bottom part being cut out so as to form the flange. The lower frame may include at least one protrusion protruding inwardly of the opening.

Referring to FIG. 8, a lower frame 280 according to another exemplary embodiment may include a protrusion 281a protruding in a width direction W of a flange 285 inwardly of an opening 281h. The protrusion 281a may be disposed to have a predetermined angle based on a virtual line parallel with respect to the width direction W of the flange 285. The protrusion 281a may be disposed below a light source to overlap the light source.

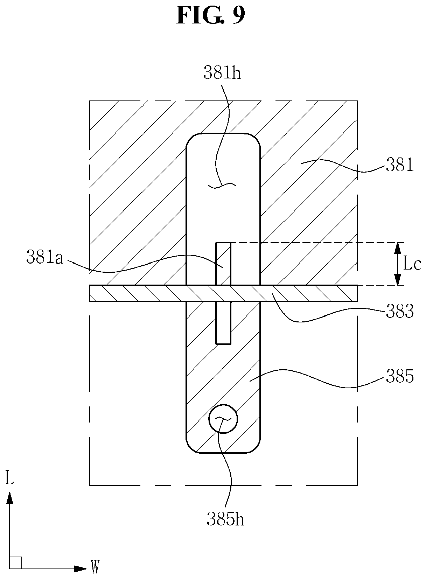

Referring to FIG. 9, a lower frame 380 according to another exemplary embodiment may include a protrusion 381a protruding in a length direction L of a flange 385 inwardly of an opening 381h. The protrusion 381a may be disposed below a light source. A length Lc of the protrusion 381a may be equal to or greater than a width of the light source in the length direction L of the light source disposed on the protrusion 381a.

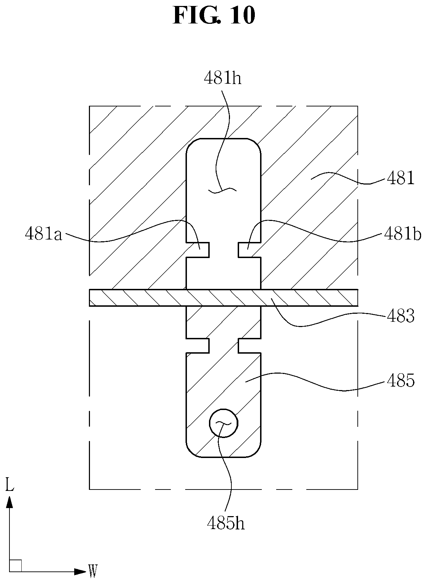

Referring to FIG. 10, a lower frame 480 according to another exemplary embodiment may include first and second protrusions 481a and 481b protruding in a width direction W of a flange 485 inwardly of an opening 481h, and the first and second protrusions 481a and 481b may be disposed to oppose one another. The flange 485 may have a width greater than a sum of lengths of the first and second protrusions 481a and 481b.

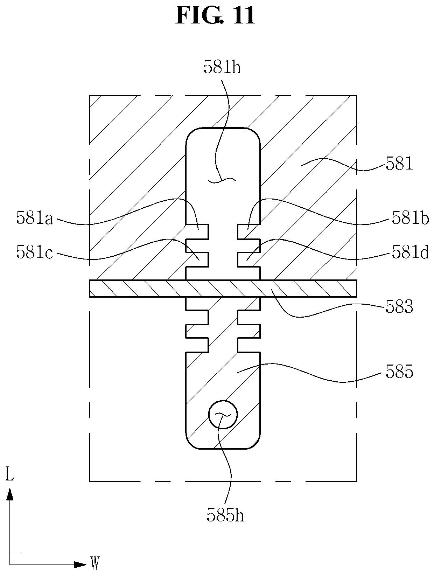

Referring to FIG. 11, a lower frame 580 according to another exemplary embodiment may include first, second, third, and fourth protrusions 581a, 581b, 581c, and 581d protruding in a width direction W of a flange 585 inwardly of an opening 581h.

The first and second protrusions 581a and 581b may be disposed to oppose one another, and the third and fourth protrusions 581c and 581d may be disposed to oppose one another. The flange 585 may have a width greater than a sum of lengths of the first and second protrusions 581a and 581b or a sum of lengths of the third and fourth protrusions 581c and 581d.

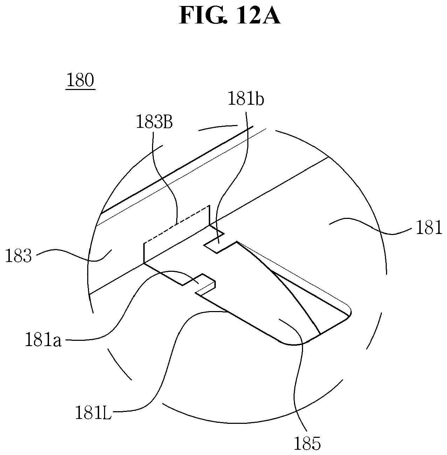

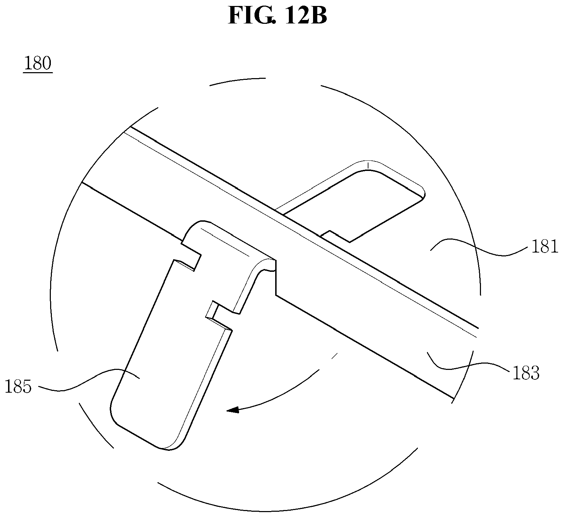

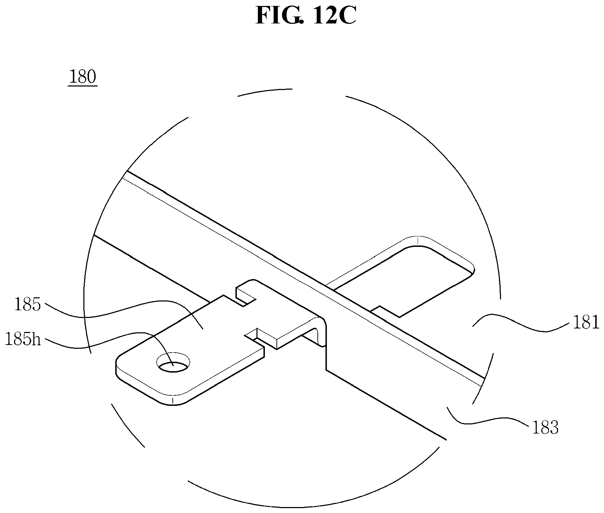

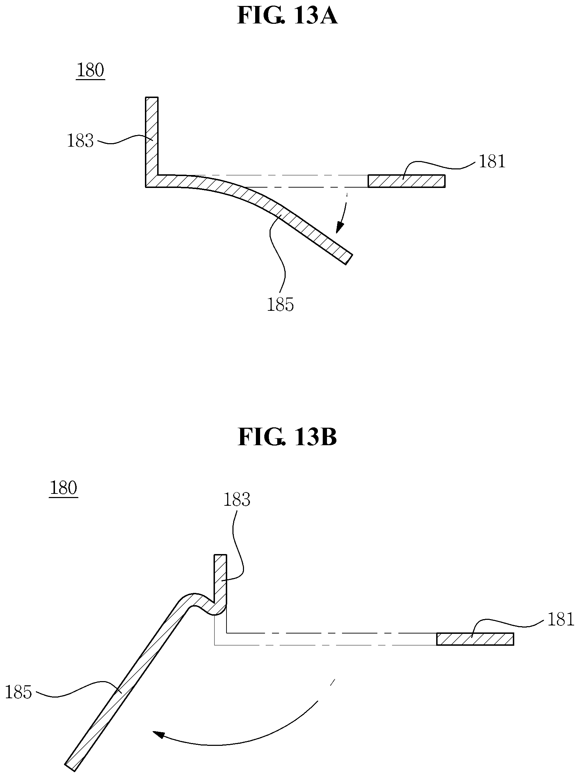

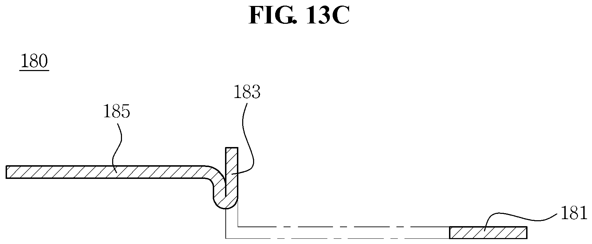

FIGS. 12A through 12C illustrate perspective views of a process of manufacturing a lower frame according to an exemplary embodiment; and FIGS. 13A through 13C illustrate cross-sectional views of a process of manufacturing a lower frame according to an exemplary embodiment.

Referring to FIGS. 12A through 12C and FIGS. 13A through 13C, the lower frame 180 according to the exemplary embodiment may include the bottom part 181, the side part 183 extending from the bottom part 181, and the flange 185 formed by the portions of the bottom part 181 and the side part 183 being cut out to be bent outwardly thereof, respectively.

The flange 185 may be formed by cutting out the portions of the bottom part 181 and the side part 183, respectively, along a cutting line 181L to be bent outwardly thereof along a bending line 183B by 180 degrees.

The bottom part 181 and the side part 183 may be cut through, for example, a laser cutting process or a punching process. A cutting process of a metal may be employed to cut out the portions of the bottom part 181 and the side part 183, respectively.

The bottom part 181 may be cut out to have portions thereof having indentations formed inwardly thereof so as to form the first and second protrusions 181a and 181b therein.

The flange 185 is illustrated as being formed by being bent once. In an embodiment, the flange 185 may be formed by being bent twice or more to help achieve rigidity.

Subsequently to the flange 185 being bent, the screw hole 185h may be formed, for example, through a punching process. The screw hole 185h is illustrated as being formed subsequently to the flange 185 being bent. In an embodiment, the screw hole 185h may be simultaneously formed during the cutting process of the bottom part 181 and the side part 183.

By way of summation and review, to drive a display device, a drive circuit board, for example, a printed circuit board (PCB), may be connected to a display panel along at least one side surface of the display panel through a flexible printed circuit board (FPCB) such as a chip on film (COF) or a tape carrier package (TCP).

To reduce a thickness of such a display device, a slim-type display device may include a flange formed in a lower frame to protrude outwardly thereof and a drive circuit board may be coupled onto the flange. Such a flange may be formed by bonding a separately provided flange to the lower frame, or cutting out a portion of the lower frame and then bending the cut out portion of the lower frame outwardly thereof.

A light source and a light source substrate for driving the light source may be disposed in an opening portion of the lower frame. As a thickness of the light source substrate for driving the light source is reduced, downward sagging of the light source substrate may occur in the opening portion of the lower frame. Due to, for example, the downward sagging of the light source substrate, light from the light source may not be precisely incident on a light guide panel, and external leakage of light may be caused.

Embodiments relate to a display device that may have a relatively slim structure.

As set forth above, according to embodiments, the display device may prevent sagging of the light source substrate for driving the light source by changing a manner in which the bottom part of the lower frame is cut out.

Example embodiments have been disclosed herein, and although specific terms are employed, they are used and are to be interpreted in a generic and descriptive sense only and not for purpose of limitation. In some instances, as would be apparent to one of skill in the art as of the filing of the present application, features, characteristics, and/or elements described in connection with a particular embodiment may be used singly or in combination with features, characteristics, and/or elements described in connection with other embodiments unless otherwise specifically indicated.

## Claims

1. A display device, comprising:
a display panel (110) to display an image by externally receiving an electrical signal applied thereto;
a lower frame (180) accommodating the display panel (110) and including a bottom part (181) and a side part (183) extending from the bottom part (181);
at least one flange (185) extending from the side part (183) of the lower frame (180) outwardly thereof; and
a drive circuit board (120) connected to the display panel (110), the drive circuit board (120) being on the flange (185),
the lower frame (180) having an opening (181h) in the bottom part (181) and at least one protrusion protruding (181a, 181b) from the opening (181h) inwardly thereof **characterized by** the following features:
the flange (185) is formed by portions of the bottom part (181) and the side part (183) being cut out to be bent outwardly thereof.

2. The display device as claimed in claim 1, wherein portions of the bottom part (181) and the side part (183) of the lower frame (180) are cut out.

3. The display device as claimed in claim 2, wherein the flange (185) is bent from the side part (183) of the lower frame (180).

4. The display device as claimed in claim 1, wherein the flange (185) has a substantially same shape as a shape of the opening (181h).

5. The display device as claimed in claim 4, wherein the flange (185) has an indentation (185c) having a substantially same shape as a shape of the protrusion (181a, 181b).

6. The display device as claimed in claim 4, wherein the protrusion (381a) extends in a length direction of the opening (381h).

7. The display device as claimed in claim 4, wherein the protrusion (181a, 181b) extends in a width direction of the opening (181h).

8. The display device as claimed in claim 7, wherein the lower frame (480) includes first (481a) and second (481b) protrusions extending to oppose one another.

9. The display device as claimed in claim 7, wherein the lower frame (180) includes first (181a) and second (181b) protrusions extending to alternate with one another.

10. The display device as claimed in claim 8, wherein the flange (185) has a width (wp) greater than a sum of lengths (La, Lb) of the first and second protrusions (181a, 181b).

11. The display device as claimed in claim 8, wherein the lower frame (580) includes at least one pair of first and second protrusions (581a, 581b, 581c, 581d).

12. The display device as claimed in claim 1, wherein the lower frame (180) has the opening (181h) in at least an edge portion of the bottom part (181).

13. The display device as claimed in claim 12, further comprising:
a light source (161) to provide light to the display panel (110); and
a light source substrate (163) to drive the light source (161),
wherein the light source (161) and the light source substrate (163) are on the opening (181h) of the lower frame (180).

14. The display device as claimed in claim 13, wherein the light source (161) is on the protrusion to overlap the protrusion (181a, 181b).

15. The display device as claimed in claim 1, wherein the flange (185) has a screw hole to couple the flange (185) to the drive circuit board (120).

16. The display device as claimed in claim 1, wherein the lower frame (180) includes one or more of aluminum (Al), an Al alloy, magnesium (Mg), a Mg alloy, copper (Cu), a Cu alloy, or steel use stainless (SUS).

## Patentansprüche

1. Anzeigevorrichtung, umfassend:
ein Anzeigepanel (110) zum Anzeigen eines Bildes durch externen Empfang eines daran angelegten elektrischen Signals;
einen unteren Rahmen (180) zur Aufnahme des Anzeigepanels (110), der ein unteres Teil (181) und ein sich von dem unteren Teil (181) weg erstreckendes Seitenteil (183) aufweist;
wenigstens einen Flansch (185), der sich vom Seitenteil (183) des unteren Rahmen (180) nach außen erstreckt, und
eine Treiberplatine (120), die mit dem Anzeigepanel (110) verbunden ist, wobei die Treiberplatine (120) auf dem Flansch (185) sitzt,
wobei der untere Rahmen (180) eine Öffnung (181h) im unteren Teil (181) und wenigstens einen Vorsprung (181a, 181b), der von der Öffnung (181h) nach innen vorsteht, aufweist,
**gekennzeichnet durch** die folgenden Merkmale:
der Flansch (185) ist durch Abschnitte des unteren Teils (181) und des Seitenteils (183) gebildet, die ausgeschnitten sind, um nach außen gebogen zu werden.

2. Anzeigevorrichtung nach Anspruch 1, wobei Abschnitte des unteren Teils (181) und des Seitenteils (183) des unteren Rahmens (180) ausgeschnitten sind.

3. Anzeigevorrichtung nach Anspruch 2, wobei der Flansch (185) vom Seitenteil (183) des unteren Rahmens (180) weggebogen ist.

4. Anzeigevorrichtung nach Anspruch 1, wobei der Flansch (185) eine im Wesentlichen der Form der Öffnung (181h) entsprechende Form aufweist.

5. Anzeigevorrichtung nach Anspruch 4, wobei der Flansch (185) eine Vertiefung (185c) mit einer im Wesentlichen der Form des Vorsprungs (181a, 181b) entsprechenden Form aufweist.

6. Anzeigevorrichtung nach Anspruch 4, wobei der Vorsprung (381a) in Längsrichtung der Öffnung (381h) verläuft.

7. Anzeigevorrichtung nach Anspruch 4, wobei der Vorsprung (181a, 181b) in einer Breitenrichtung der Öffnung (181h) verläuft.

8. Anzeigevorrichtung nach Anspruch 7, wobei der untere Rahmen (480) erste (481a) und zweite (481b) Vorsprünge aufweist, die einander gegenüber liegend verlaufen.

9. Anzeigevorrichtung nach Anspruch 7, wobei der untere Rahmen (180) erste (181a) und zweite (181b) Vorsprünge aufweist, die alternierend verlaufen.

10. Anzeigevorrichtung nach Anspruch 8, wobei der Flansch (185) eine Breite (wp) aufweist, die größer als eine Summe von Längen (La, Lb) der ersten und zweiten Vorsprünge (181a, 181b) ist.

11. Anzeigevorrichtung nach Anspruch 8, wobei der untere Rahmen (580) wenigstens ein erstes Paar erster und zweiter Vorsprünge (581a, 581b, 581c, 581d) aufweist.

12. Anzeigevorrichtung nach Anspruch 1, wobei der untere Rahmen (180) die Öffnung (181h) in wenigstens einem Randabschnitt des unteren Teils (181) aufweist.

13. Anzeigevorrichtung nach Anspruch 12, ferner umfassend:
eine Lichtquelle (161), die das Anzeigepanel (110) mit Licht versorgt, und
ein Lichtquellensubstrat (163) zum Ansteuern der Lichtquelle (161),
wobei die Lichtquelle (161) und das Lichtquellensubstrat (163) auf der Öffnung (181h) des unteren Rahmens (180) liegen.

14. Anzeigevorrichtung nach Anspruch 13, wobei die Lichtquelle (161) auf dem Vorsprung sitzt, um den Vorsprung (181a, 181b) zu überlappen.

15. Anzeigevorrichtung nach Anspruch 1, wobei der Flansch (185) ein Schraubloch zum Koppeln des Flansches (185) mit der Treiberplatine (120) aufweist.

16. Anzeigevorrichtung nach Anspruch 1, wobei der untere Rahmen (180) eines oder mehrere von Folgendem aufweist: Aluminium (Al), eine Al-Legierung, Magnesium (Mg), eine Mg-Legierung, Kupfer (Cu), eine Cu-Legierung oder Edelstahl (SUS).

## Revendications

1. Dispositif d'affichage comprenant :
un panneau d'affichage (110) destiné à afficher une image en recevant de l'extérieur un signal électrique qui lui est appliqué ;
un cadre inférieur (180) recevant le panneau d'affichage (110) et comprenant une partie de fond (181) et une partie latérale (183) qui s'étend à partir de la partie de fond (181) ;
au moins une bride (185) qui s'étend vers l'extérieur à partir de la partie latérale (183) du cadre inférieur (180) et
une carte de circuit excitateur (120) connectée au panneau d'affichage (110),
laquelle carte de circuit excitateur (120) se trouve sur la bride (185),
le cadre inférieur (180) possédant une ouverture (181h) dans la partie de fond (181) et au moins une saillie (181a, 181b) qui dépasse par l'ouverture (181h) à l'intérieur de celle-ci,
**caractérisé en ce que** la bride (185) est formée par des parties de la partie de fond (181) et la partie latérale (183) est découpée pour être repliée vers l'extérieur de celle-ci.

2. Dispositif d'affichage selon la revendication 1, dans lequel des parties de la partie de fond (181) et la partie latérale (183) du cadre inférieur (180) sont découpées.

3. Dispositif d'affichage selon la revendication 2, dans lequel la bride (185) est repliée à partir de la partie latérale (183) du cadre inférieur (180).

4. Dispositif d'affichage selon la revendication 1, dans lequel la bride (185) a sensiblement la même forme que l'ouverture (181h).

5. Dispositif d'affichage selon la revendication 4, dans lequel la bride (185) possède une indentation (185c) sensiblement de la même forme que la saillie (181a, 181b).

6. Dispositif d'affichage selon la revendication 4, dans lequel la saillie (381a) s'étend dans le sens de la longueur de l'ouverture (381h).

7. Dispositif d'affichage selon la revendication 4, dans lequel la saillie (181a, 181b) s'étend dans le sens de la largeur de l'ouverture (181h).

8. Dispositif d'affichage selon la revendication 7, dans lequel le cadre inférieur (480) comprend une première saillie (481a) et une deuxième (481b) qui s'étendent en opposition l'une à l'autre.

9. Dispositif d'affichage selon la revendication 7, dans lequel le cadre inférieur (180) comprend une première saillie (181a) et une deuxième (181b) qui s'étendent en alternant l'une avec l'autre.

10. Dispositif d'affichage selon la revendication 8, dans lequel la bride (185) a une largeur (wp) plus grande que la somme des longueurs (La, Lb) des première et deuxième saillies (181a, 181b).

11. Dispositif d'affichage selon la revendication 8, dans lequel le cadre inférieur (580) comprend au moins une paire de premières et deuxièmes saillies (581a, 581b, 581c, 581d).

12. Dispositif d'affichage selon la revendication 1, dans lequel le cadre inférieur (180) présente l'ouverture (181h) dans au moins une partie de bord de la partie de fond (181).

13. Dispositif d'affichage selon la revendication 12, comprenant en outre :
une source lumineuse (161) pour amener de la lumière au panneau d'affichage (110) et
un substrat de source lumineuse (163) pour exciter la source lumineuse (161),
la source lumineuse (161) et le substrat de source lumineuse (163) se trouvant sur l'ouverture (181h) du cadre inférieur (180).

14. Dispositif d'affichage selon la revendication 13, dans lequel la source lumineuse (161) se trouve sur la saillie de façon à chevaucher la saillie (181a, 181b).

15. Dispositif d'affichage selon la revendication 1, dans lequel la bride (185) possède un trou de vis pour coupler la bride (185) à la carte de circuit excitateur (120).

16. Dispositif d'affichage selon la revendication 1, dans lequel le cadre inférieur (180) comprend un ou plusieurs métaux parmi l'aluminium (Al), un alliage d'aluminium, le magnésium (Mg), un alliage de magnésium, le cuivre (Cu), un alliage de cuivre ou de l'acier inoxydable (SUS).
